# EUROPEAN PATENT APPLICATION

(11) **EP 4 617 582 A1**
(43) Date of publication of application: **17.09.2025**
(21) Application number: 22964939.7
(22) Date of filing: 25.11.2022
(51) Int. Cl.: F24F 11/72, F24F 11/86

(54) **METHOD FOR CONTROLLING ENVIRONMENTAL CONDITIONING DEVICE, AND ENVIRONMENTAL CONDITIONING DEVICE AND STORAGE MEDIUM**

(30) Priority: 07.11.2022 CN 202211387046
(71) Applicant: GD Midea Air-Conditioning Equipment Co., Ltd., Foshan, Guangdong 528311 (CN)
(72) Inventor: HUANG, Jianyun, Foshan, Guangdong 528311 (CN); XU, Zhenkun, Foshan, Guangdong 528311 (CN); ZHONG, Mingliang, Foshan, Guangdong 528311 (CN); HUANG, Zhaobin, Foshan, Guangdong 528311 (CN); LI, Jinbo, Foshan, Guangdong 528311 (CN); HU, Yuanxiang, Foshan, Guangdong 528311 (CN)
(74) Representative: Ran, Handong
(86) International application number: PCT/CN2022/134422
(87) International publication number: WO 2024/098472

(57) **Abstract**

The present application discloses a method for controlling an environmental conditioning device, and an environmental conditioning device and a storage medium. The environmental conditioning device comprises a heat pump system. The method comprises: acquiring a frequency feature parameter of a heat pump system reaching a temperature and shutting down and a target frequency at which a compressor in the heat pump system operates; determining a target starting frequency platform of the compressor according to the frequency feature parameter and the target frequency; and when the compressor is started, according to the target starting frequency platform, controlling the compressor to operate.

## Description

The present application claims priority to Chinese patent application No. 202211387046.4, filed on November 7, 2022, the entire contents of which are incorporated by reference in the present application.

### TECHNICAL FIELD

The present application relates to the technical field of electric appliances, and in particular to a method for controlling environmental conditioning device, an environmental conditioning device and a storage medium.

### BACKGROUND

Most environmental conditioning devices are equipped with a heat pump system to provide the required cooling or heating for indoor environmental conditioning. The heat pump system is generally pre-set with a fixed startup frequency platform of the compressor. When the compressor is restarted after the system reaches the temperature and shuts down, the compressor will force all startup frequency platforms to operate and adjust to the required target frequency, which easily leads to the environmental conditioning device with a small load. When the compressor enters the state of reaching the temperature and shutting down again before operating all startup frequency platforms, it will cause frequent start-stop problems of the compressor, affecting the reliability and service life of the device.

### SUMMARY

The main purpose of the present application is to provide a method for controlling an environmental conditioning device, an environmental conditioning device, and a storage medium, aiming to avoid frequent start-stop of the compressor in the environmental conditioning device and improve the operating reliability and service life of the device.

To achieve the above purpose, the present application provides a method for controlling an environmental conditioning device, the environmental conditioning device includes a heat pump system, and the method for controlling the environmental conditioning device includes the following steps:
obtaining a frequency characteristic parameter of the heat pump system reaching a temperature and shutting down, and a target frequency of a compressor in the heat pump system;
determining a control parameter of a startup frequency platform of the compressor according to the frequency characteristic parameter and the target frequency; and
in response to that the compressor is started, controlling the compressor to operate according to the control parameter.

In an embodiment, the step of determining the control parameter of the startup frequency platform of the compressor according to the frequency characteristic parameter and the target frequency includes:
obtaining a preset frequency platform collection of the compressor, the preset frequency platform collection includes a first frequency platform collection and a second frequency platform collection, and the first frequency platform collection is a collection of preset frequency platforms that are required to be forced to operate in response to that the compressor is started;
in response to that the frequency characteristic parameter is less than a preset value and the target frequency is less than a first preset frequency, determining operating the first frequency platform collection in response to that the compressor is started as the control parameter; and
in response to that the frequency characteristic parameter is greater than or equal to the preset value and the target frequency is less than a second preset frequency, determining operating the frequency platform in the first frequency platform collection that meets a preset condition in response to that the compressor is started as the control parameter, or determining stopping the frequency platform in response to that the compressor is started as the control parameter;
the first preset frequency is a minimum value of all frequency values corresponding to the second frequency platform collection, the second preset frequency is a maximum value of all frequency values corresponding to the first frequency platform collection, the first preset frequency is greater than the second preset frequency, and the preset condition is that the frequency value corresponding to the frequency platform is less than the target frequency.

In an embodiment, the step of determining operating the frequency platform in the first frequency platform collection that meets the preset condition in response to that the compressor is started as the control parameter includes:
determining operating all frequency platforms in the first frequency platform collection that meet the preset condition in response to that the compressor is started as the control parameter.

In an embodiment, the step of determining operating the frequency platform in the first frequency platform collection that meets the preset condition in response to that the compressor is started as the control parameter, or determining stopping the frequency platform in response to that the compressor is started as the control parameter includes:
in response to that there is a frequency platform that meets the preset condition in the first frequency platform collection, executing the step of determining operating the frequency platform in the first frequency platform collection that meets the preset condition in response to that the compressor is started as the control parameter; and
in response to that there is no frequency platform that meets the preset condition in the first frequency platform collection, executing the step of determining stopping the frequency platform in response to that the compressor is started as the control parameter.

In an embodiment, the step of obtaining the preset frequency platform collection of the compressor includes:
obtaining a target heat-exchange mode of the heat pump system; and
determining the preset frequency platform collection according to the target heat-exchange mode.

In an embodiment, the step of obtaining the frequency characteristic parameter of the heat pump system reaching the temperature and shutting down includes:
obtaining a continuous number of times that the environmental conditioning device reaches a temperature and shuts down under a preset operating state before a current moment, the preset operating state is that a continuous operation time of the compressor is less than or equal to the preset time; and
determining the frequency characteristic parameter according to the continuous number of times.

In an embodiment, the step of determining the frequency characteristic parameter according to the continuous number of times includes:
in response to that the continuous number of times is less than the preset number of times, reducing the continuous number of times according to a preset correction value to obtain the frequency characteristic parameter; and
in response to that the continuous number of times is greater than or equal to the preset number of times, determining the preset number of times as the frequency characteristic parameter.

In an embodiment, the step of controlling the compressor to operate according to the control parameter in response to that the compressor is started includes:
in response to that the compressor is started, determining a frequency rise rate of the compressor according to the frequency characteristic parameter; and
controlling the compressor to operate by frequency increase according to the control parameter and the frequency rise rate.

In an embodiment, the environmental conditioning device further includes a coolant circulation system in a heat-exchange connection with the heat pump system, the coolant circulation system is configured to adjust an environmental parameter of an indoor environment, the reaching the temperature and shutting down is that the compressor is stopped in response to that a coolant temperature of the coolant circulation system reaches a target temperature, and the step of the in response to that the compressor is started, determining the frequency rise rate of the compressor according to the frequency characteristic parameter includes:
in response to that the compressor is started, obtaining a current coolant temperature of the coolant circulation system and an environment temperature of an indoor space;
determining a first temperature difference between the coolant temperature and a target coolant temperature, and determining a second temperature difference between the environment temperature and the coolant temperature;
determining a target correspondence between the frequency characteristic parameter and the frequency rise rate according to the first temperature difference and the second temperature difference; and
determining the frequency rise rate corresponding to the frequency characteristic parameter according to the target correspondence.

In addition, in order to realized the above objective, the present application also provides an environmental conditioning device, including:
a heat pump system;
a coolant circulation system in a heat-exchange connection to the heat pump system, and the coolant circulation system is configured to adjust the environmental parameter of the indoor environment; and
a control device connected to the heat pump system, the control device includes: a memory, a processor, and a program for controlling the environmental conditioning device stored in the memory and executable on the processor, the steps of the method for controlling the environmental conditioning device are implemented when the program for controlling the environmental conditioning device is executed by the processor.

In addition, in order to realized the above objective, the present application also provides a storage medium, a program for controlling an environmental conditioning device is stored in the storage medium, and steps of the method for controlling the environmental conditioning device are implemented when the program for controlling the environmental conditioning device is executed by a processor.

The present application provides the method for controlling the environmental conditioning device, which is based on the environmental conditioning device provided with the heat pump system. The method determines the control parameter of the startup frequency platform of the compressor based on the frequency characteristic parameter of the environmental conditioning device when it reaches the temperature and shuts down and the target frequency of the operation of the compressor in the heat pump system. When the compressor is started up, it is no longer forced to operate according to the preset frequency platform. The operation of the startup frequency platform of the compressor can be adjusted according to the actual reaching the temperature and shutting down situation of the compressor and the operation requirements after startup. The compressor can be prevented from the reaching the temperature and shutting down before the operation of the preset frequency platform is completed, thereby effectively avoiding frequent start-stop of the compressor in the environmental conditioning device and improving the operation reliability and service life of the device.

### BRIEF DESCRIPTION OF THE DRAWINGS

FIG. 1 is a schematic structural diagram of an environmental conditioning device according to an embodiment of the present application.
FIG. 2 is a schematic structural diagram of a hardware involved in an operation of the environmental conditioning device according to an embodiment of the present application.
FIG. 3 is a flowchart of a method for controlling the environmental conditioning device according to an embodiment of the present application.
FIG. 4 is the flowchart of the method for controlling the environmental conditioning device according to an embodiment of the present application.
FIG. 5 is the flowchart of the method for controlling the environmental conditioning device according to an embodiment of the present application.
FIG. 6 is the flowchart of the method for controlling the environmental conditioning device according to an embodiment of the present application.
FIG. 7 is the flowchart of the method for controlling the environmental conditioning device according to an embodiment of the present application.

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are only used to explain the present application and are not used to limit the present application.

The present application embodiment provides an environmental conditioning device, which is specifically used to adjust the environmental parameter of the indoor environment.

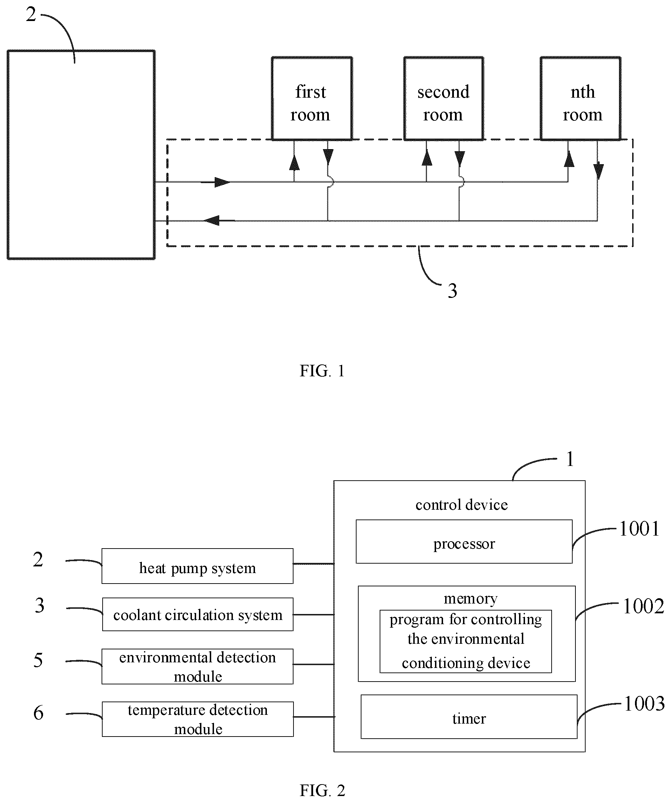

In an embodiment of the present application, referring to FIG. 1 and FIG. 2, the environmental conditioning device includes a heat pump system 2, a coolant circulation system 3 connected to the heat-exchange of the heat pump system 2, and a control device 1. Both the heat pump system 2 and the coolant circulation system 3 are connected to the control device 1. The coolant circulation system is configured to adjust the environmental parameter (such as the environment temperature and/or the environment humidity, etc.) of the indoor space through the energy output by the heat pump system. The heat pump system 2 is configured to provide energy (such as cooling or heating) for the heat-exchange between the coolant circulation system 3 and the indoor space.

In an embodiment, the coolant circulation system 3 is a waterway system, the heat pump system 2 is configured to adjust the temperature of the supply water of the coolant circulation system 3, and the coolant circulation system 3 is configured to adjust the indoor temperature. In an embodiment of the present application, the temperature of the supply water of the coolant circulation system 3 can be understood as the temperature of the discharge water of the heat pump system 2. In other embodiments, the coolant circulation system 3 may also be a system that uses other media to transmit energy, such as ethanol solution.

In an embodiment, the heat pump system 2 is an air source heat pump system 2. In other embodiments, the heat pump system 2 may also be a water source heat pump system, a ground source heat pump system or a dual source heat pump system.

In an embodiment, the heat pump system 2 includes a refrigerant circulation circuit and a heat exchange channel. The refrigerant circulation circuit includes a compressor, a first heat exchanger, a throttling apparatus and a second heat exchanger, and the second heat exchanger is in a heat-exchange connection to the heat exchange channel. The heat pump system 2 may have two operating modes, a cooling mode and a heating mode. When the heat pump system 2 operates in the cooling mode, the second heat exchanger is in an evaporation state to absorb heat; and when the heat pump system 2 operates in the heating mode, the second heat exchanger is in a condensation state to release heat.

The coolant circulation system 3 includes a medium circulation circuit and a terminal heat exchange device provided in the medium circulation circuit. The terminal heat exchange device may include a fan coil unit, a floor heating coil unit, a radiation panel, a fan tray or a heat sink, etc. The cooling or heating of the coolant (such as water, ethylene glycol, etc.) in the medium circulation circuit can be released from the terminal heat exchange device to the indoor space where it is located. One or more terminal heat exchange devices may be provided, and more than one terminal heat exchange device may be distributed in different indoor spaces. The heat-exchange types of the terminal heat exchange devices in different indoor spaces may be the same or different. Based on this, the cooling or heating carried by the coolant (such as water, ethylene glycol, etc.) in the medium circulation circuit can be used to adjust the environment temperature of more than one indoor space.

The medium circulation circuit is provided with an inlet and an outlet. The inlet of the medium circulation circuit is communicated with the outlet of the heat exchange channel, and the outlet of the medium circulation circuit is communicated with the inlet of the heat exchange channel.

Specifically, the coolant circulation system includes a circulation pump provided in the medium circulation circuit, and the circulation pump is configured to drive the coolant to circulate and adjust the temperature of the indoor space through the energy output by the heat pump system. In an embodiment, the circulation pump is a water pump. In other embodiments, the circulation pump may also be other fluid pumps.

During the operation of the heat pump system 2, the coolant in the heat exchange channel of the heat pump system 2 may absorb the cooling or heating released by the second heat exchanger to form a coolant carrying cooling or heating, and the coolant carrying cooling or heating flowing out of the heat exchange channel may enter the medium circulation circuit and flow to the terminal heat exchange device, so as to release cooling or heating into the air of the indoor space to adjust the environment temperature of the indoor space. After releasing cooling or heating, the coolant can re-enter the heat exchange channel to exchange heat with the second heat exchanger. After the heat-exchange, the coolant can re-enter the medium circulation circuit to exchange heat, so as to realize the regulation of the indoor space temperature by the environmental conditioning device.

When the heat pump system 2 is in the refrigeration operation, the second heat exchanger is in the evaporation state. The medium in the heat exchange channel absorbs the cooling output by the second heat exchanger and decreases in temperature to form a coolant carrying cooling. The coolant carrying cooling enters the medium circulation circuit and flows to the terminal heat exchange device, releasing cooling to the indoor space, and the environmental temperature of the indoor space decreases.

When the heat pump system 2 is in the heating operation, the second heat exchanger is in a condensation state, and the medium in the heat exchange channel absorbs the heating output by the second heat exchanger and increases in temperature to form a coolant carrying heating. The coolant carrying heating enters the medium circulation circuit and flows to the terminal heat exchange device, releasing the heating to the indoor space, and the environment temperature of the indoor space increases.

In other embodiments, the environmental conditioning device can also directly adjust the indoor environment through the second heat exchanger in the heat pump system 2 and the heat-exchange with the indoor environment.

In an embodiment, referring to FIG. 2, the control device 1 can also be connected to the environmental detection module 5, and the environmental detection module 5 can include an indoor temperature sensor and an outdoor temperature sensor. The indoor temperature sensor can detect the environment temperature of the indoor space adjusted by the environmental conditioning device; and the outdoor temperature sensor can detect the environment temperature of the outdoor space where the environmental conditioning device is located.

In an embodiment, referring to FIG. 2, the control device 1 may also be connected to a temperature detection module 6 provided in a coolant circulation system for detecting the coolant temperature. Specifically, the temperature detection module 6 may be provided at one side of a heat exchange channel outlet for detecting the coolant temperature flowing out of the heat exchange channel; the temperature detection module 6 may also be provided at one side of a heat exchange channel inlet for detecting the coolant temperature flowing into the heat exchange channel; and the temperature detection module 6 may also be provided at the inlet or outlet of a terminal heat exchange device for detecting the coolant temperature flowing into or out of the terminal heat exchange device.

In an embodiment of the present application, referring to FIG. 2, the control device 1 of the environmental conditioning device includes: a processor 1001 (e.g., a CPU), a memory 1002, a timer 1003, etc. The components in the control device 1 are communicated via a communication bus. The memory 1002 may be a high-speed RAM memory or a stable memory (non-volatile memory), such as a disk memory. The memory 1002 may be a storage apparatus independent of the processor 1001.

Those skilled in the art may understand that the apparatus structure shown in FIG. 2 does not constitute a limitation on the apparatus, and may include more or fewer components than shown, or combine certain components, or arrange components differently.

As shown in FIG. 2, the memory 1002 as a storage medium may include a program for controlling the environmental conditioning device. As shown in FIG. 2, the processor 1001 may be configured to call the program for controlling the environmental conditioning device stored in the memory 1002, and perform the relevant steps of the method for controlling the environmental conditioning device in the following embodiments.

The embodiment of the present application also provides a method for controlling the environmental conditioning device, which is applied to the environmental conditioning device.

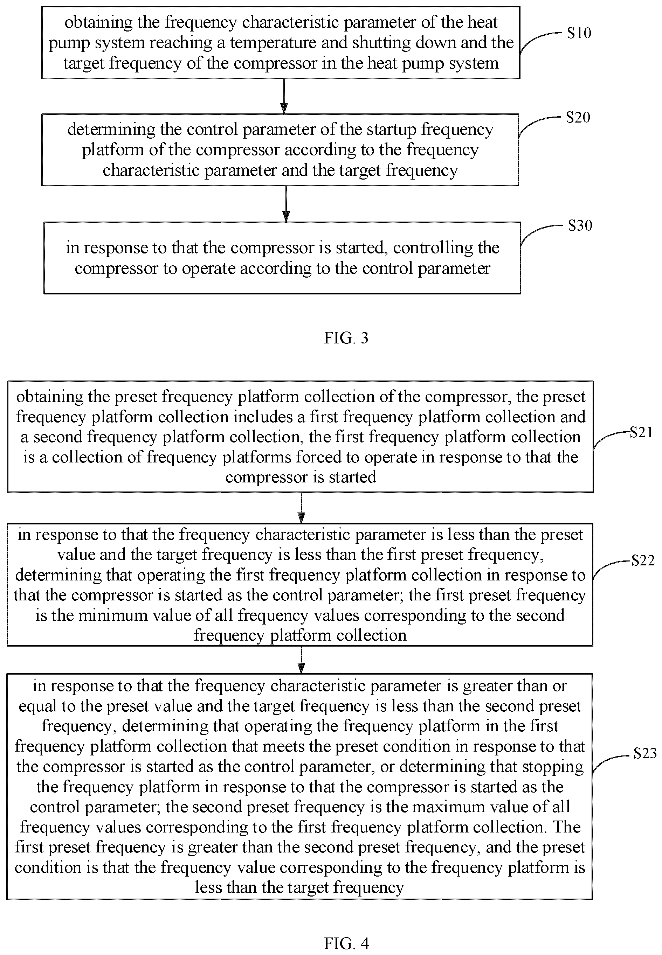

Referring to FIG. 3, the present application provides the method for controlling the environmental conditioning device. In an embodiment, the method for controlling the environmental conditioning device includes:

Step S10, obtaining the frequency characteristic parameter of the heat pump system reaching a temperature and shutting down and the target frequency of the compressor in the heat pump system.

The frequency characteristic parameter is specifically a characteristic parameter that characterizes the frequency of the environmental conditioning device in response to that the heat pump system reaches the temperature and shuts down. The numerical value of the frequency characteristic parameter is positively correlated with the frequency it characterizes. The larger the numerical value, the more frequent it is; and the smaller the frequency, the less frequent it is. The frequency characteristic parameter may be the total number of times the environmental conditioning device system reaches the temperature and shuts down within a preset time period. The frequency characteristic parameter may also be the statistical number of times the environmental conditioning device system reaches the temperature and shuts down when the operation meets the preset condition. The frequency characteristic parameter may also include the stopping time after the environmental conditioning device system reaches the temperature and shuts down, etc.

The frequency characteristic parameter may start counting when receiving the preset instruction input by the user, may also be counted within the preset time period before the current moment of the environmental conditioning device, may also be counted when the environmental conditioning device reaches the target state, and may even be monitored during the operation of the environmental conditioning device according to the preset operation parameter.

In an embodiment, the environmental conditioning device may further include a coolant circulation system. The reaching the temperature and shutting down means that the compressor is stopped in response to that the coolant temperature of the coolant circulation system reaches the target temperature. During the operation of the environmental conditioning device in the cooling mode or the heating mode, the coolant temperature of the coolant circulation system is monitored. When the coolant temperature is less than or equal to the target temperature in the cooling mode, the heat pump system is stopped. When the coolant temperature is greater than or equal to the target temperature in the heating mode, the heat pump system is stopped. The coolant temperature here is specifically obtained by obtaining the detection data of the temperature detection module in the reaching the temperature and shutting down state. In an embodiment, the coolant temperature is the coolant temperature of the coolant circulation system flowing out after the heat-exchange with the heat pump system. In other embodiments, the coolant temperature may be the coolant temperature of the coolant circulation system before the heat-exchange with the heat pump system, or the coolant temperature flowing out of the terminal heat exchange device, or the coolant temperature flowing into the terminal heat exchange device.

The target temperature is a critical value of the coolant temperature for identifying whether the operation of the environmental conditioning device has met the requirements for the heat-exchange with the indoor environment. If the coolant temperature reaches the target temperature, it indicates that the energy currently carried by the coolant circulation system can meet the requirements for the heat-exchange with the indoor environment, and the heat pump system does not need to be turned on to output energy to the coolant circulation system; if the coolant temperature does not reach the target temperature, it indicates that the energy currently carried by the coolant circulation system cannot meet requirements for the heat-exchange with the indoor environment, and the heat pump system needs to be turned on to supplement the energy required by the coolant circulation system to regulate the indoor space.

Specifically, step S10 can be performed in response to that the environmental conditioning device is powered on, in the reaching the temperature and shutting down state, in response to that a preset instruction input by the user is received, in response to that the environmental conditioning device is in the on state, or in response to that the operation of the environmental conditioning device meets other preset conditions.

Step S20, determining the control parameter of the startup frequency platform of the compressor according to the frequency characteristic parameter and the target frequency.

The startup frequency platform includes the required operating frequency value and the corresponding duration after the startup of the compressor. The control parameter specifically includes whether to operate the startup frequency platform, the number of startup frequency platforms that are operating, the frequency value of the startup frequency platforms that are operating, and/or the operating time of the startup frequency platforms that are operating.

Different frequency characteristic parameters and target frequencies correspond to different control parameters.

In an embodiment, the control parameter includes the target start frequency platform required to operate after the startup of the compressor. The target start frequency platform can be one or more. Specifically, one or more can be determined as the target start frequency platform from the preset frequency platforms according to the frequency characteristic parameter and the target frequency, or the frequency range corresponding to the startup frequency platform can be determined according to the frequency characteristic parameter and the target frequency, and one or more than one frequency value can be extracted from the frequency range according to the preset rules to generate the corresponding frequency platform as the startup frequency platform. The total number of target start frequency platforms can be determined according to the frequency characteristic parameter, and different frequency characteristic parameters correspond to different numbers of target start frequency platforms.

Step S30, in response to that the compressor is started, controlling the compressor to operate according to the control parameter.

Specifically, in response to that the compressor is started, the compressor is controlled to operate according to the control parameter and the frequency is increased to the target frequency.

When the control parameter includes at least one target start frequency platform, in response to that the compressor is started, the frequency is increased to each target start frequency platform in order of the frequency value corresponding to each target start frequency platform, and the compressor is operated at the target frequency after operating all target start frequency platforms.

When the control parameter includes stopping the frequency platform, in response to that the compressor is started, the compressor is controlled to stop the frequency platform and increase the frequency to the target frequency.

The method for controlling the environmental conditioning device in an embodiment of the present application is based on an environmental conditioning device provided with a heat pump system. The method determines the control parameter of the startup frequency platform of the compressor based on the frequency characteristic parameter of the environmental conditioning device when it reaches the temperature and shuts down and the target frequency of the operation of the compressor in the heat pump system. When the compressor is started up, it is no longer forced to operate according to the preset frequency platform. The operation of the startup frequency platform of the compressor can be adjusted according to the actual reaching the temperature and shutting down situation of the compressor and the operation requirements after startup. The compressor can be prevented from the reaching the temperature and shutting down situation before the operation of the preset frequency platform is completed, thereby effectively avoiding frequent start-stop of the compressor in the environmental conditioning device and improving the operation reliability and service life of the device.

Based on the above embodiment, the present application provides another embodiment of the method for controlling the environmental conditioning device. In an embodiment, referring to FIG. 4, the step S20 includes:
Step S21, obtaining the preset frequency platform collection of the compressor, the preset frequency platform collection includes a first frequency platform collection and a second frequency platform collection, the first frequency platform collection is a collection of frequency platforms forced to operate in response to that the compressor is started.

The first frequency platform collection may include one or more frequency platforms, and different frequency platforms correspond to different frequency values. The first frequency platform collection is specifically a collection of frequency platforms determined according to the target parameter range when the compressor is operating with reliability. The force operation specifically means that after the startup of the compressor, the frequency platforms in the first frequency platform collection must be operated in sequence based on the frequency value size, then the target frequency is operated.

The second frequency platform collection may include one or more frequency platforms, and different frequency platforms correspond to different frequency values. The second frequency platform collection is a collection of frequency platforms that are not forced to operate after the startup of the compressor. All frequency values corresponding to the second frequency platform collection are greater than all frequency values corresponding to the first frequency platform collection.

Step S22, in response to that the frequency characteristic parameter is less than the preset value and the target frequency is less than the first preset frequency, determining that operating the first frequency platform collection in response to that the compressor is started as the control parameter; the first preset frequency is the minimum value of all frequency values corresponding to the second frequency platform collection.

The preset value is specifically used to distinguish whether the compressor in the environmental conditioning device has the risk of frequent start-stop. If the frequency characteristic parameter is less than the preset value, it indicates that the compressor in the environmental conditioning device does not have the risk of frequent start-stop; if the frequency characteristic parameter is greater than or equal to the preset value, it indicates that the compressor in the environmental conditioning device has the risk of frequent start-stop.

Step S23, in response to that the frequency characteristic parameter is greater than or equal to the preset value and the target frequency is less than the second preset frequency, determining that operating the frequency platform in the first frequency platform collection that meets the preset condition in response to that the compressor is started as the control parameter, or determining that stopping the frequency platform in response to that the compressor is started as the control parameter; the second preset frequency is the maximum value of all frequency values corresponding to the first frequency platform collection. The first preset frequency is greater than the second preset frequency, and the preset condition is that the frequency value corresponding to the frequency platform is less than the target frequency.

In response to that the frequency characteristic parameter is greater than or equal to the preset value and the target frequency is less than the second preset frequency, the preset frequency values corresponding to all the determined target start frequency platforms are less than the target frequency.

For example, three frequency platforms are preset, the frequency value corresponding to the first frequency platform is less than the frequency value corresponding to the second frequency platform, the frequency value corresponding to the second frequency platform is less than the frequency value corresponding to the third frequency platform, the first and second frequency platforms are forced to operate, and the preset value is 4. Then, in response to that the frequency characteristic parameter is less than 4 and the target frequency is less than the frequency value corresponding to the third frequency platform, the first and second frequency platforms are used as target start frequency platforms; in response to that the frequency characteristic parameter is greater than or equal to 4 and the target frequency is less than the frequency value of the second frequency platform and greater than the frequency value of the first frequency platform, the first frequency platform is used as the target start frequency platform.

In an embodiment, the compressor does not have the problem of frequent start-stop and the target frequency is less than the minimum frequency value corresponding to the frequency platform collection that are not forced to operate, indicating that the risk of reaching the temperature and shutting down after operating all the frequency platforms forced to operate and adjusting to the target frequency is small. At this time, the control parameter is operating all the frequency platforms that are forced to operate, so as to improve the reliability of the operation after the startup of the compressor. When the compressor has the problem of frequent start-stop and the target frequency is less than the maximum value of the preset frequency value corresponding to all the preset frequency platforms, it indicates that the load after the startup of the compressor is small and it is easy to reach the temperature and shut down during the process of operating all the frequency platforms that are forced to operate. At this time, the control parameter is operating some preset frequency platforms or not operating the frequency platform, reducing the time required to operate the frequency platform after the startup of the compressor, which can ensure that the compressor will not operate a frequency platform higher than the actual target frequency after startup, thereby effectively avoiding the situation of reaching the temperature and shutting down before the startup of the compressor reaches the target frequency, so as to effectively prevent the compressor from frequent start-stop.

In other embodiments, in response to that the frequency characteristic parameter is less than the preset value and the target frequency is greater than or equal to the first preset frequency, it can be determined that operating the first frequency platform collection and the second frequency platform collection as the control parameter in response to that the compressor is started, or it can be determined that operating the first frequency platform collection as the control parameter in response to that the compressor is started.

Based on step S21, during the execution of step S30, in response to that the compressor is started, the compressor is controlled to operate all frequency platforms in the first frequency platform collection in order from small to large according to the size of the corresponding frequency value. After operating all frequency platforms in the first frequency platform collection, the compressor is controlled to adjust to the target frequency. In response to that the target frequency is less than the second preset frequency, the compressor is controlled to reduce to the target frequency for operation; and in response to that the target frequency is greater than the second preset frequency, the compressor is controlled to increase to the target frequency for operation.

The part of the frequency platforms that need to be operated in the first frequency platform collection is the target frequency platform collection. Based on step S22, during the execution of step S30, in response to thin response to that the compressor is started, controlling the compressor to operate all the frequency platforms in the target frequency platform collection in order from small to large according to the size of the corresponding frequency value. After operating all the frequency platforms in the target frequency platform collection, the compressor is controlled to increase the frequency to the target frequency for operation.

In an embodiment, the step of determining that operating the frequency platform in the first frequency platform collection that meets the preset condition in response to that the compressor is started as the control parameter includes:
determining that operating all the frequency platforms that meet the preset condition in the first frequency platform collection as the control parameter in response to that the compressor is started, and the preset condition is that the frequency value corresponding to the frequency platform is less than the target frequency.

Based on this, it can be ensured that the frequency value corresponding to the preset frequency platform operating after the startup of the compressor will not exceed the target frequency, further avoiding the reaching the temperature and shutting down pf the compressor in response to that the operating frequency does not reach the target frequency, thereby further preventing the compressor from frequent start-stop and improving the operating reliability and service life.

In other embodiments, it can be determined that operating the preset frequency platform with the smallest preset frequency value among the preset frequency platforms as the control parameter in response to that the compressor is started.

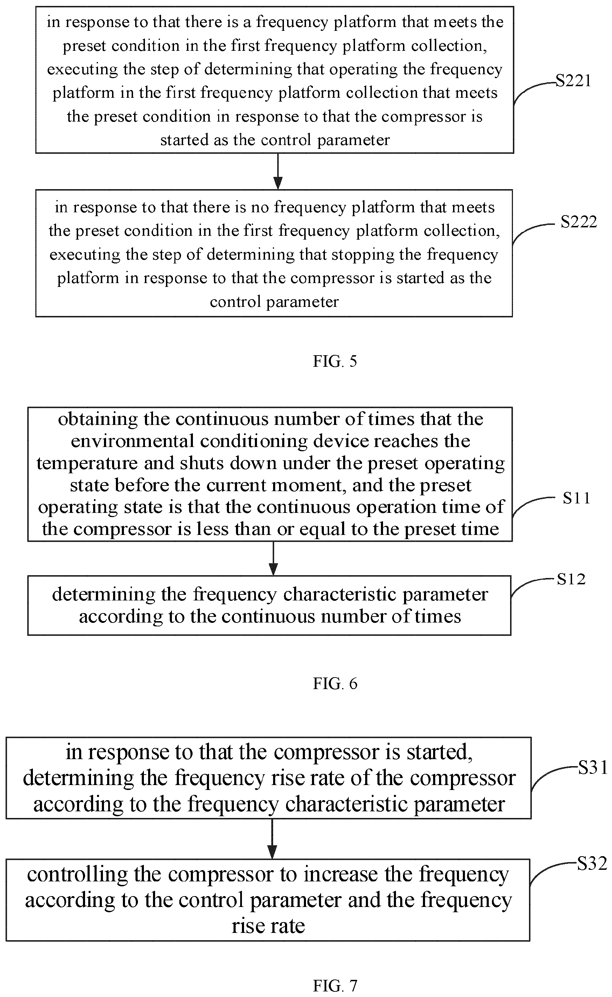

Based on any of the above embodiments, the present application provides another embodiment of the method for controlling the environmental conditioning device. In an embodiment, referring to FIG. 5, the step of determining that operating the frequency platform in the first frequency platform collection that meets the preset condition in response to that the compressor is started as the control parameter, or determining that stopping the frequency platform in response to that the compressor is started as the control parameter includes:

Step S221, in response to that there is a frequency platform that meets the preset condition in the first frequency platform collection, executing the step of determining that operating the frequency platform in the first frequency platform collection that meets the preset condition in response to that the compressor is started as the control parameter.

Step S222, in response to that there is no frequency platform that meets the preset condition in the first frequency platform collection, executing the step of determining that stopping the frequency platform in response to that the compressor is started as the control parameter.

In an embodiment, in response to that there are frequency platforms whose preset frequency value is less than the target frequency in the first frequency platform collection, operating these frequency platforms that meet the conditions in response to that the compressor is started and increasing the frequency to the target frequency; in response to that there are no frequency platforms that meet the conditions in the first frequency platform collection, the method for directly increasing the frequency to the target frequency is adopted for control, which can ensure that the frequent start-stop of the compressor is avoided while further improving the reliability of the operation of the compressor.

Based on any of the above embodiments, step S21 includes: obtaining the target heat-exchange mode of the heat pump system, and determining the preset frequency platform collection according to the target heat-exchange mode.

The target heat-exchange mode includes the cooling mode or the heating mode. Different target heat-exchange modes correspond to different preset frequency platform collections. Specifically, the number of frequency platforms in the first frequency platform collection and/or the second frequency platform collection corresponding to different target heat-exchange modes may be different, the frequency value of the corresponding frequency platform may be different, and/or the continuous operation time of the frequency value of the corresponding frequency platform may be different.

Based on any of the above embodiments, the present application provides another embodiment of the method for controlling the environmental conditioning device. In an embodiment, referring to FIG. 6, the step of obtaining the frequency characteristic parameter of the heat pump system in response to that the heat pump system reaches the temperature and shuts down includes:
Step S11, obtaining the continuous number of times that the environmental conditioning device reaches the temperature and shuts down under the preset operating state before the current moment, and the preset operating state is that the continuous operation time of the compressor is less than or equal to the preset time.

Specifically, during the operation of the environmental conditioning device, each continuous operation time of the environmental conditioning device before reaching the temperature and shutting down can be obtained, and the count value is increased if the continuous operation time is less than or equal to the preset time. The initial value of the count value in response to that the environmental conditioning device is powered on is 0. If the continuous operation time is greater than the preset time, the count value is cleared and accumulated again according to whether the continuous operation time of the environmental conditioning device before reaching the temperature and shutting down is less than or equal to the preset time.

Step S12, determining the frequency characteristic parameter according to the continuous number of times.

Specifically, the continuous number of times can be directly used as the frequency characteristic parameter, or the result after the continuous number of times is corrected can be used as the frequency characteristic parameter.

In an embodiment, in response to that the continuous number of times is less than the preset number of times, the continuous number of times is reduced according to the preset correction value to obtain the frequency characteristic parameter; and in response to that the continuous number of times is greater than or equal to the preset number of times, the preset number of times is determined as the frequency characteristic parameter. The preset value is less than or equal to the preset number of times. For example, the frequency characteristic parameter is H, the preset number of times is B, and the continuous number of times is h, then in response to that h is less than B, H=h-1, where H is 0 in response to that h is 0, and in response to that h is greater than or equal to B, H=B.

In an embodiment, the frequency characteristic parameter is determined according to the continuous number of times in response to that the device reaches the temperature and shuts down and the continuous operation time is less than the preset time, which is conducive to improving the accuracy of the frequency characteristic parameter in characterizing the risk of frequent start-stop of the device, thereby further improving the accuracy of adjusting the startup frequency platform of the compressor, and further reducing the risk of frequent start-stop of the compressor. The continuous number of times is not directly used as the frequency characteristic parameter, but the continuous number of times corrected based on the result of comparison with the preset value is used as the frequency characteristic parameter, so as to ensure that the frequency characteristic parameter will not be too large when the continuous number of times is large, and the frequency characteristic parameter can be further reduced when the continuous number of times is small, ensuring that in the subsequent process of determining the startup frequency platform based on the frequency characteristic parameter, the frequency value and quantity corresponding to the startup frequency platform relating to the determined regulation parameter will not be too small, which is conducive to ensuring the accuracy of adjusting the startup frequency platform, so as to further improve the reliability and life of the operation of the compressor.

Based on any of the above embodiments, the present application provides another embodiment of the method for controlling the environmental conditioning device. In an embodiment, the environmental conditioning device further includes a coolant circulation system, and the coolant circulation system is in a heat-exchange connection to the heat pump system. The coolant circulation system is configured to adjust the environmental parameter of the indoor environment, and the reaching the temperature and shutting down is that the compressor stops working in response to that the coolant temperature of the coolant circulation system reaches the target temperature. Referring to FIG. 7, step S30 includes:
Step S31, in response to that the compressor is started, determining the frequency rise rate of the compressor according to the frequency characteristic parameter.

Different frequency characteristic parameters have different frequency rise rates. The frequency characteristic parameter is negatively correlated with the frequency rise rate. Specifically, a corresponding relationship between the frequency characteristic parameter and the frequency rise rate can be established in advance, and the corresponding relationship can include a mapping relationship, a calculation formula, etc. Based on the corresponding relationship, the frequency rise rate corresponding to the frequency characteristic parameter can be determined by looking up a table or calculating.

Further, in addition to the frequency characteristic parameter, when the control parameter includes operating the target frequency platform in response to that the compressor is started, such as the first frequency platform collection or all frequencies that meet the preset condition, the frequency rise rate after startup of the compressor can be determined according to the frequency characteristic parameter and the platform characteristics of the target frequency platform (such as the number and/or the corresponding frequency value, etc.).

Step S32, controlling the compressor to increase the frequency according to the control parameter and the frequency rise rate.

In response to that the control parameter includes operating the target frequency platform in response to that the compressor is started, such as the first frequency platform collection or all frequencies that meet the preset condition. If the number of target frequency platforms is one, the frequency is increased to the target frequency platform according to the frequency rise rate. After the target frequency platform is completed, the frequency is increased to the target frequency according to the frequency rise rate. If the number of target frequency platforms is more than one, the frequency is increased to each target frequency platform in turn according to the frequency rise rate. After all target frequency platforms are completed, the frequency is increased to the target frequency according to the frequency rise rate.

In response to that the control parameter includes stopping the frequency platform in response to that the compressor is started, the frequency can be increased to the target frequency according to the frequency rise rate after the startup of the compressor.

In an embodiment, the above method is helpful to ensure that the frequency rise rate in response to that the compressor is started matches the actual frequency of reaching the temperature and shutting down of the device, so as to further reduce the risk of frequent start-stop of the compressor.

In an embodiment, step S31 includes: in response to that the compressor is started, obtaining the current coolant temperature of the coolant circulation system and the environment temperature of the indoor space; determining a first temperature difference between the coolant temperature and the target coolant temperature, and determining a second temperature difference between the environment temperature and the coolant temperature; determining a target correspondence between the frequency characteristic parameter and the frequency rise rate according to the first temperature difference and the second temperature difference; and determining the frequency rise rate corresponding to the frequency characteristic parameter according to the target correspondence.

The coolant temperature is specifically obtained by obtaining the detection data of the temperature detection module in the reaching the temperature and shutting down state. In an embodiment, the coolant temperature is the coolant temperature of the coolant circulation system flowing out after the heat-exchange with the heat pump system. In other embodiments, the coolant temperature may be the coolant temperature of the coolant circulation system before the heat-exchange with the heat pump system, or the coolant temperature flowing out of the terminal heat exchange device, or the coolant temperature flowing into the terminal heat exchange device.

Specifically, more than one preset correspondence between the frequency characteristic parameter and the frequency rise rate may be preset, and different first temperature difference values and different second temperature difference values correspond to different preset correspondences. The preset correspondence may include a calculation formula or a mapping relationship. One of the more than one preset correspondences may be determined as the target correspondence.

Based on the target correspondence, the frequency rise rate may be obtained by calculating the frequency characteristic parameter or looking up the table.

In an embodiment, the first temperature difference value and the second temperature difference value may accurately reflect the speed of reaching the temperature and shutting down state again after startup of the compressor. Based on this, the frequency rise rate corresponding to the target correspondence determined by combining the first temperature difference value and the second temperature difference value is determined, which is conducive to further improving the accuracy of the frequency rise rate, thereby further reducing the risk of the frequent start-stop of the compressor, and further improving the reliability and service life of the compressor.

Based on any of the above embodiments, after step S 10, the method further includes: determining the target hysteresis temperature of the coolant in response to that the compressor is started according to the frequency characteristic parameter; and in response to that the heat pump system is in the reaching the temperature and shutting down state, controlling the startup of the compressor according to the target hysteresis temperature and executing step S30. The execution order of the step of determining the target hysteresis temperature and the step S20 are not specifically limited.

The target hysteresis temperature is specifically used to determine the critical value of the coolant temperature in response to that the heat pump system switches from the off state to the on state.

The sum of the target temperature and the target hysteresis temperature can be used as the critical value, the difference between the target temperature and the target hysteresis temperature can also be used as the critical value, or the target hysteresis temperature can be directly used as the critical value.

Different frequency characteristic parameters can correspond to different target hysteresis temperatures. The target hysteresis temperature is negatively correlated with the frequency of startup and shutdown characterized by the frequency characteristic parameter. The greater the frequency of the start-up and shutdown represented by the frequency characteristic parameter, the greater the target hysteresis temperature.

The corresponding relationship between the frequency characteristic parameter and the target hysteresis temperature may be different if the heat-exchange mode of the environmental conditioning device is different. Based on this, the target corresponding relationship corresponding to the current heat-exchange mode can be determined, and the target hysteresis temperature corresponding to the current frequency characteristic parameter can be determined based on the target corresponding relationship.

Specifically, the target hysteresis temperature can be obtained by adjusting the current startup hysteresis temperature or the preset fixed startup hysteresis temperature according to the temperature adjustment value determined by the frequency characteristic parameter. In an embodiment, the current target hysteresis temperature can be calculated by substituting the frequency characteristic parameter into the preset formula. The mapping relationship between the number of times of shutdowns at different temperatures and the startup hysteresis temperature is established in advance, and the startup hysteresis temperature mapped by the current frequency characteristic parameter is determined as the target hysteresis temperature.

Specifically, the temperature critical value that the coolant needs to reach in response to that the heat pump system is restarted after reaching the temperature and shutting down is determined according to the target hysteresis temperature. Specifically, the temperature critical value can be determined according to the target hysteresis temperature and the target temperature, or the temperature critical value can be determined according to the target hysteresis temperature and the coolant temperature at the time in response to that the heat pump system reaches the temperature and shuts down.

In response to that the heat pump system is in the reaching the temperature and shutting down state and the coolant temperature reaches the temperature critical value determined based on the target hysteresis temperature, the heat pump system is controlled to start. In response to that the heat pump system is in the reaching the temperature and shutting down state and the coolant temperature does not reach the temperature critical value determined based on the target hysteresis temperature, the heat pump system is controlled to maintain the off state.

In an embodiment, the target hysteresis temperature of the coolant for startup control after the environmental conditioning device reaches the temperature and shuts down is determined based on the number of times the coolant temperature reaches the target temperature to trigger the heat pump system to stop. In response to that the heat pump system is stopped, the startup operation of the heat pump system is controlled based on the coolant temperature and the target hysteresis temperature of the coolant circulation system. In this process, the startup hysteresis temperature of the coolant in the device is no longer a preset fixed value, but is the value determined according to the number of times the heat pump system reaches the temperature and shuts down, so that the startup hysteresis temperature is ensured to be accurately matched with the actual startup and shutdown conditions of the heat pump system in the environmental conditioning device, thereby effectively improving the accuracy of startup control after the heat pump system reaches the temperature and shuts down, avoiding frequent startup and shutdown of the heat pump system, and increasing the service life of the device while reducing indoor temperature fluctuations.

In an embodiment, the method for controlling the environmental conditioning device further includes:
Step S01, in response to that the heat pump system is in the on state, obtaining the first coolant temperature of the coolant circulation system.

The first coolant temperature can be specifically detected by the temperature detection module. The first coolant temperature is the same concept as the coolant temperature in the above-mentioned embodiments.

Step S02, in response to that the first coolant temperature reaches the target temperature, controlling the heat pump system to stop and obtaining the continuous operation time of the heat pump system.

In response to that the heat pump system is operated in the heating mode, the heat pump system is controlled to shut down in response to that the first coolant temperature is greater than or equal to the target temperature. In response to that the heat pump system is operated in the cooling mode, the heat pump system is controlled to shut down in response to that the first coolant temperature is less than or equal to the target temperature.

The continuous operation time is specifically the total continuous operation time of the heat pump system in the current startup operating state.

Step S03, in response to that the continuous operation time is less than or equal to the first preset time, executing the step of obtaining the frequency characteristic parameter of the environmental conditioning device reaching the temperature and shutting down.

The first preset duration can be a preset fixed duration or a duration determined according to the actual operation of the environmental conditioning device. Specifically, the compressor frequency of the heat pump system and the heat-exchange type of the terminal heat exchange device in the on state during the startup and operation of the environmental conditioning device can be obtained, and the first preset duration is determined according to the compressor frequency and the heat-exchange type.

In an embodiment, in response to that the environmental conditioning device reaches the temperature and shuts down, if the continuous operation time is less than or equal to the first preset time, it indicates that the startup operation time of the heat pump system is too short and there is a risk of frequent start-stop. At this time, the target hysteresis temperature is determined based on the frequency characteristic parameter of the reaching the temperature and shutting down, which is conducive to improving the accuracy of the subsequent control of the startup of the heat pump system based on the target hysteresis temperature, avoiding the heat pump system from starting too quickly after reaching the temperature and shutting down, so as to further avoid frequent start-stop of the environmental conditioning device.

In an embodiment, the step of determining the target hysteresis temperature of the coolant in response to that the compressor is started according to the frequency characteristic parameter includes: determining a temperature adjustment value according to the frequency characteristic parameter; increasing the current hysteresis temperature of the coolant currently controlled by the heat pump system at the start-up according to the temperature adjustment value to obtain the target hysteresis temperature.

The temperature adjustment value may include a temperature adjustment amplitude or a temperature coefficient, etc. Specifically, the temperature adjustment value may be positively correlated with the frequency characteristic parameter.

Different frequency characteristic parameters correspond to different temperature adjustment values. Specifically, different frequency characteristic parameters may establish a mapping relationship with different temperature adjustment values, and the value mapped by the current frequency characteristic parameter is used as the current temperature adjustment value. The temperature adjustment value may also be calculated by substituting the frequency characteristic parameter into a preset formula.

The corresponding relationship between the frequency characteristic parameter and the temperature adjustment value may be a preset fixed relationship, or may be a value determined according to the actual operation of the environmental conditioning device. Specifically, one of the correspondences between more than one frequency characteristic parameter and the temperature adjustment value may be determined as the target correspondence according to the continuous operation time or the difference between the continuous operation time and the first preset time. In an embodiment, one of the correspondences between more than one frequency characteristic parameter and the temperature adjustment value may be determined as the target correspondence according to the continuous operation time and the device type and corresponding quantity of the terminal heat exchange device that is turned on during the current startup of the environmental conditioning device. The temperature adjustment value corresponding to the current frequency characteristic parameter may be determined based on the target correspondence.

In an embodiment, the temperature adjustment value is the temperature adjustment amplitude, and the sum of the current hysteresis temperature and the temperature adjustment amplitude is used as the target hysteresis temperature. In other embodiments, the temperature adjustment value may also be a temperature adjustment ratio greater than 1, and the product of the current hysteresis temperature and the temperature adjustment ratio is used as the target hysteresis temperature.

In an embodiment, by increasing the current hysteresis temperature, it is ensured that the heat pump system will not start operating until the change of the coolant temperature is large enough (specifically, the deviation from the target temperature is large enough) after the heat pump system reaches the temperature and shuts down, and the heat pump system will not start too quickly after shutting down, thereby further reducing the risk of frequent start-stop of the heat pump system.

In addition, the present application also provides a storage medium, on which a program for controlling the environmental conditioning device is stored. When the program for controlling the environmental conditioning device is executed by the processor, the relevant steps of any embodiment of the method for controlling the environmental conditioning device as above are implemented.

It should be noted that, in this article, the terms "include", "comprise" or any other variants thereof are intended to cover non-exclusive inclusion, so that a process, method, article or system including a series of elements includes not only those elements, but also other elements not explicitly listed, or also includes elements inherent to such process, method, article or system. In the absence of further restrictions, an element defined by the sentence "includes a..." does not exclude the existence of other identical elements in the process, method, article or system including the element.

The serial numbers of the embodiments of the present application are only for description and do not represent the advantages and disadvantages of the embodiments.

Through the description of the above implementation methods, those skilled in the art can clearly understand that the above embodiment method can be implemented by means of software plus the necessary general hardware platform. Of course, it can also be implemented by hardware, but in many cases the former is a better implementation method. Based on this understanding, the technical solution of the present application, or the part that contributes to the prior art, can be embodied in the form of a software product. The computer software product is stored in a storage medium (such as ROM/RAM, disk, CD) as described above, including several instructions to enable a terminal device (which can be a mobile phone, computer, server, environmental conditioning device, or network device, etc.) to execute the methods described in each embodiment of the present application.

The above are only embodiments of the present application, and do not limit the scope of the present application. Any equivalent structure or equivalent process transformation made by using the content of the description and drawings of the present application, or directly or indirectly used in other related technical fields, is also included in the scope of the present application.

## Claims

1. A method for controlling an environmental conditioning device, **characterized in that**, the environmental conditioning device comprises a heat pump system, and the method for controlling the environmental conditioning device comprises:
obtaining a frequency characteristic parameter of the heat pump system reaching a temperature and shutting down, and a target frequency of a compressor in the heat pump system;
determining a control parameter of a startup frequency platform of the compressor according to the frequency characteristic parameter and the target frequency; and
in response to that the compressor is started, controlling the compressor to operate according to the control parameter.

2. The method for controlling the environmental conditioning device according to claim 1, wherein the step of determining the control parameter of the startup frequency platform of the compressor according to the frequency characteristic parameter and the target frequency comprises:
obtaining a preset frequency platform collection of the compressor, wherein the preset frequency platform collection comprises a first frequency platform collection and a second frequency platform collection, and the first frequency platform collection is a collection of preset frequency platforms that are required to be forced to operate when the compressor is started;
in response to that the frequency characteristic parameter is less than a preset value and the target frequency is less than a first preset frequency, determining operating the first frequency platform collection in response to that the compressor is started as the control parameter; and
in response to that the frequency characteristic parameter is greater than or equal to the preset value and the target frequency is less than a second preset frequency, determining operating the frequency platform in the first frequency platform collection that meets a preset condition in response to that the compressor is started as the control parameter, or determining stopping the frequency platform in response to that the compressor is started as the control parameter,
wherein the first preset frequency is a minimum value of all frequency values corresponding to the second frequency platform collection, the second preset frequency is a maximum value of all frequency values corresponding to the first frequency platform collection, the first preset frequency is greater than the second preset frequency, and the preset condition is that the frequency value corresponding to the frequency platform is less than the target frequency.

3. The method for controlling the environmental conditioning device according to claim 2, wherein the step of determining operating the frequency platform in the first frequency platform collection that meets the preset condition in response to that the compressor is started as the control parameter comprises:
determining operating all frequency platforms in the first frequency platform collection that meet the preset condition in response to that the compressor is started as the control parameter.

4. The method for controlling the environmental conditioning device according to claim 3, wherein the step of determining operating the frequency platform in the first frequency platform collection that meets the preset condition in response to that the compressor is started as the control parameter, or determining stopping the frequency platform in response to that the compressor is started as the control parameter comprises:
in response to that there is a frequency platform that meets the preset condition in the first frequency platform collection, executing the step of determining operating the frequency platform in the first frequency platform collection that meets the preset condition in response to that the compressor is started as the control parameter; and
in response to that there is no frequency platform that meets the preset condition in the first frequency platform collection, executing the step of determining stopping the frequency platform in response to that the compressor is started as the control parameter.

5. The method for controlling the environmental conditioning device according to claim 2, wherein the step of obtaining the preset frequency platform collection of the compressor comprises:
obtaining a target heat-exchange mode of the heat pump system; and
determining the preset frequency platform collection according to the target heat-exchange mode.

6. The method for controlling the environmental conditioning device according to claim 1, wherein the step of obtaining the frequency characteristic parameter of the heat pump system reaching the temperature and shutting down comprises:
obtaining a continuous number of times that the environmental conditioning device reaches a temperature and shuts down under a preset operating state before a current moment, wherein the preset operating state is that a continuous operation time of the compressor is less than or equal to the preset time; and
determining the frequency characteristic parameter according to the continuous number of times.

7. The method for controlling the environmental conditioning device according to claim 6, wherein the step of determining the frequency characteristic parameter according to the continuous number of times comprises:
in response to that the continuous number of times is less than a preset number of times, reducing the continuous number of times according to a preset correction value to obtain the frequency characteristic parameter; and
in response to that the continuous number of times is greater than or equal to the preset number of times, determining the preset number of times as the frequency characteristic parameter.

8. The method for controlling the environmental conditioning device according to any one of claims 1 to 7, wherein the step of controlling the compressor to operate according to the control parameter in response to that the compressor is started comprises:
in response to that the compressor is started, determining a frequency rise rate of the compressor according to the frequency characteristic parameter; and
controlling the compressor to operate by frequency increase according to the control parameter and the frequency rise rate.

9. The method for controlling the environmental conditioning device according to claim 8, wherein the environmental conditioning device further comprises a coolant circulation system in a heat-exchange connection with the heat pump system, the coolant circulation system is configured to adjust an environmental parameter of an indoor environment, said reaching the temperature and shutting down is that the compressor is stopped in response to that a coolant temperature of the coolant circulation system reaches a target temperature, and the step of the in response to that the compressor is started, determining the frequency rise rate of the compressor according to the frequency characteristic parameter comprises:
in response to that the compressor is started, obtaining a current coolant temperature of the coolant circulation system and an environment temperature of an indoor space;
determining a first temperature difference between the coolant temperature and a target coolant temperature, and determining a second temperature difference between the environment temperature and the coolant temperature;
determining a target correspondence between the frequency characteristic parameter and the frequency rise rate according to the first temperature difference and the second temperature difference; and
determining the frequency rise rate corresponding to the frequency characteristic parameter according to the target correspondence.

10. An environmental conditioning device, comprising:
a heat pump system; and
a control device connected to the heat pump system, comprising: a memory, a processor, and a program for controlling the environmental conditioning device stored in the memory and executable on the processor, the steps of the method for controlling the environmental conditioning device according to any one of claims 1 to 9 are implemented when the program for controlling the environmental conditioning device is executed by the processor.

11. A storage medium, wherein a program for controlling an environmental conditioning device is stored in the storage medium, and steps of the method for controlling the environmental conditioning device according to any one of claims 1 to 9 are implemented when the program for controlling the environmental conditioning device is executed by a processor.
